# EUROPEAN PATENT SPECIFICATION

(11) **EP 3 128 706 B1**
(45) Date of publication and mention of the grant of the patent: **21.09.2022**
(21) Application number: 14890618.3
(22) Date of filing: 29.04.2014
(51) Int. Cl.: H04W 74/00, H04W 76/36, H04W 72/10

(54) **RESOURCE REUSE METHOD AND APPARATUS**
VERFAHREN UND VORRICHTUNG ZUR RESSOURCENWIEDERVERWENDUNG
PROCÉDÉ ET APPAREIL DE RÉUTILISATION DE RESSOURCES

(43) Date of publication of application: 08.02.2017
(73) Proprietor: HUAWEI TECHNOLOGIES CO., LTD., Shenzhen Guangdong 518129 (CN)
(72) Inventor: ZHANG, Xingwei, Shenzhen Guangdong 518129 (CN); LI, Chao, Shenzhen Guangdong 518129 (CN)
(74) Representative: Maiwald Patent- und Rechtsanwaltsgesellschaft mbH
(86) International application number: PCT/CN2014/076445
(87) International publication number: WO 2015/165029

(56) References cited:
- CN-A- 101 409 933
- CN-A- 101 459 969
- CN-A- 101 908 999
- US-A1- 2012 076 154
- US-A1- 2013 051 326
- US-A1- 2013 176 958
- CAVIGLIONE L ET AL: "Using P2P overlays to provide QoS in service-oriented wireless networks -[Service-oriented broadband wireless network architecture]", IEEE WIRELESS COMMUNICATIONS, IEEE SERVICE CENTER, PISCATAWAY, NJ, US, vol. 16, no. 4, 1 August 2009 (2009-08-01) , pages 32-38, XP011278096, ISSN: 1536-1284

## Description

### TECHNICAL FIELD

The present invention relates to the field of communications technologies, and in particular, to a resource reuse method and apparatus.

### BACKGROUND

US2012/076154A1 describes that a network device for adjusting resource delegation in a network includes a first network device and a second network device that coordinate and manage a resource. The second network device may release a resource occupied by services that are capturable, and allocate the resource to high-priority services that request the resource according to a resource delegation adjustment request message and resource delegation information carried in the resource delegation adjustment request message, which solves the problem that the resource usage of the high-priority services is not able to be satisfied in the case of insufficient resource, improves the utilization efficiency of the resource, and therefore enhances user experience.

Caviglione L and Davoli F "Using P2P overlays to provide QoS in service-oriented wireless networks", IEEE Wireless Communications August 2009 pages 32-38, describes that an increasing number of applications require some form of guarantees from the network, in terms of bandwidth or access and transfer delay. This demand for quality of service can be met by means of different mechanisms, depending on the networks being traversed, as well as the degree of integration of the services with the communication infrastructure. Whereas end-to-end QOS provision is still an open problem, several possibilities now exist in local environments. The article investigates the capabilities offered by a p2p overlay for distributed bandwidth management in a controlled ad hoc deployment, to support specific requirements in service-oriented wireless networks. The mechanism proposed allows complementing the core functionalities the IEEE 802.11e protocol, and enhancing them to handle local mobility and dynamic requests for bandwidth.

With development of communications technologies and an increase of ultra-high-rate services, load of a communications network becomes increasingly heavy. To reduce the network load and improve spectrum resource utilization, D2D (Device to Device, device to device) communication is widely used. In a D2D communication mode, terminals may directly communicate with each other, and how the terminals reuse a resource in a communication process becomes a key that affects D2D communication performance.

During resource reuse in a related technology, terminals of a same service type are grouped into one group, and a resource is allocated to each group, so that terminals of a same service type in a same group obtains, by means of free contention, the resource allocated to each group in advance. In addition, a resource that is reused by terminals in a same group is an idle resource in the group. When there is an idle resource in a group, terminals in the group may reuse the idle resource; when there is no idle resource in a group, terminals in the group need to wait and can reuse a resource only when there is an idle resource.

In a process of implementing the present invention, the related technology has at least the following disadvantage:

During resource reuse in the related technology, terminals in a group obtain a resource in the group by means of free contention, and in a case of free contention, a probability of obtaining the resource by each terminal in the group is the same. When a service type of a terminal in a group is a high priority service of which a priority is relatively high, but there is no idle resource in the group, in this case, the terminal of a high service priority cannot reuse a resource until an idle resource appears. As a result, in the related technology, a delay of resource reuse is relatively long, and efficiency is relatively low.

### SUMMARY

To resolve a problem in a related technology, embodiments of the present invention provide a resource reuse method and apparatus. The technical solutions are as follows:
According to an aspect, there is provided an first terminal as defined in appended claim 1. According to another aspect, there is provided an second terminal as defined in appended claim 3. According to another aspect, there is provided a resource reuse method as defined in appended claim 5. According to another aspect, there is provided a resource reuse method as defined in appended claim 7.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a resource reuse apparatus shown according to an embodiment;
FIG. 2 is a schematic structural diagram of a resource reuse apparatus shown according to an exemplary embodiment, not encompassed in the wording of the claims;
FIG. 3 is a schematic structural diagram of a resource reuse apparatus shown according to an exemplary embodiment, not encompassed in the wording of the claims;
FIG. 4 is a schematic structural diagram of a resource reuse apparatus shown according to an embodiment;
FIG. 5 is a schematic structural diagram of a resource reuse apparatus shown according to an exemplary embodiment, not encompassed in the wording of the claims;
FIG. 6 is a schematic structural diagram of a resource reuse apparatus shown according to an exemplary embodiment, not encompassed in the wording of the claims;
FIG. 7 is a flowchart of a resource reuse method shown according to an exemplary embodiment, not encompassed in the wording of the claims;
FIG. 8 is a flowchart of a resource reuse method shown according to an embodiment;
FIG. 9 is a flowchart of a resource reuse method shown according to an embodiment;
FIG. 10 is a flowchart of a resource reuse method shown according to an embodiment;
FIG. 11 is a schematic structural diagram of a first terminal shown according to an embodiment; and
FIG. 12 is a schematic structural diagram of a second terminal shown according to an embodiment.

### DESCRIPTION OF EMBODIMENTS

To make the objectives, technical solutions, and advantages of the present invention clearer, the following further describes the embodiments of the present invention in detail with reference to the accompanying drawings.

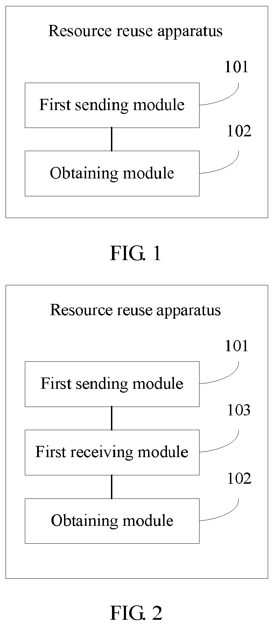

FIG. 1 is a resource reuse apparatus shown according to an exemplary embodiment, where the apparatus includes:
a first sending module 101, configured to send a declaration message on a first resource, so that after receiving the declaration message, a terminal of a low service priority releases an occupied second resource according to the declaration message; and
an obtaining module 102, configured to obtain the second resource released by the terminal of a low service priority.

In an optional embodiment, not encompassed in the wording of the claims, the declaration message sent by the first sending module 101 carries a number of the second resource specified to be released; or
the declaration message sent by the first sending module 101 carries a terminal identifier corresponding to the terminal of a low service priority that is specified to release the second resource.

In the embodiment covered by the claimed invention, the declaration message sent by the first sending module 101 carries priority information.

Referring to FIG. 2, the apparatus, not encompassed in the wording of the claims, further includes:
a first receiving module 103, configured to receive a resource release response sent on a corresponding response subresource by at least one terminal of a low service priority that meets a resource release condition and is determined according to the priority information, where the resource release response carries a number of the second resource or a terminal identifier corresponding to the terminal of a low service priority that releases the second resource.

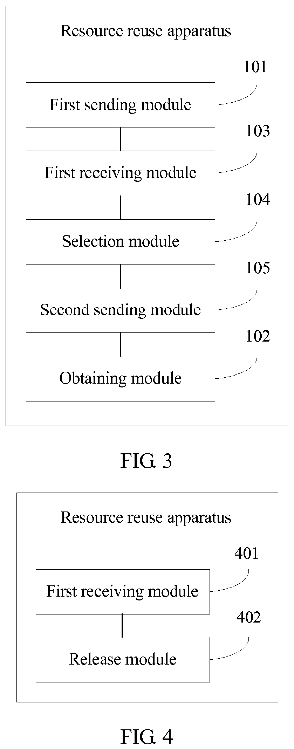

Referring to FIG. 3, the apparatus, not encompassed in the wording of the claims, further includes:
a selection module 104, configured to select, from the terminal that sends the resource release response, a terminal to release a resource; and
a second sending module 105, configured to send a resource release instruction to the selected terminal, so that the selected terminal releases an occupied second resource after receiving the resource release instruction, where the resource release instruction carries a number of the second resource or a terminal identifier corresponding to the terminal of a low service priority that releases the second resource.

In an optional embodiment, the first resource is a resource used by any terminal of a high service priority to send a declaration message, and the second resource is a resource obtained by contention by each terminal of a low service priority.

In an optional embodiment, the response subresource is a resource used by any terminal of a low service priority to send a resource release response, and each response subresource corresponds to one second resource.

According to the apparatus provided in this embodiment, a declaration message is sent on a first resource, so that after receiving the declaration message, a terminal of a low service priority releases an occupied second resource according to the declaration message, so as to obtain the second resource released by the terminal of a low service priority. Because a terminal of a high service priority may obtain a resource without waiting, a delay of resource contention is shortened, and resource utilization efficiency is improved.

FIG. 4 is a resource reuse apparatus shown according to an embodiment covered by the claimed invention, where the apparatus includes:
a first receiving module 401, configured to receive a declaration message sent on a first resource by a terminal of a high service priority in a same group; and
a release module 402, configured to release an occupied second resource according to the declaration message.

In an optional embodiment, not encompassed in the wording of the claims, the declaration message received by the first receiving module 401 carries a number of the second resource specified to be released; and
the release module 402 is configured to release the occupied second resource after determining that a number of the occupied second resource matches the number of the second resource specified to be released that is carried in the declaration message; or
the declaration message received by the first receiving module 401 carries a terminal identifier corresponding to a terminal of a low service priority that is specified to release the second resource; and
the release module 402 is configured to release the occupied second resource after determining that a terminal identifier is the same as the terminal identifier corresponding to the terminal of a low service priority that is specified to release the second resource.

The declaration message received by the first receiving module 401 carries priority information; and
the release module 402 is configured to release the occupied second resource after determining that a priority of a currently processed service is lower than the priority information carried in the declaration message.

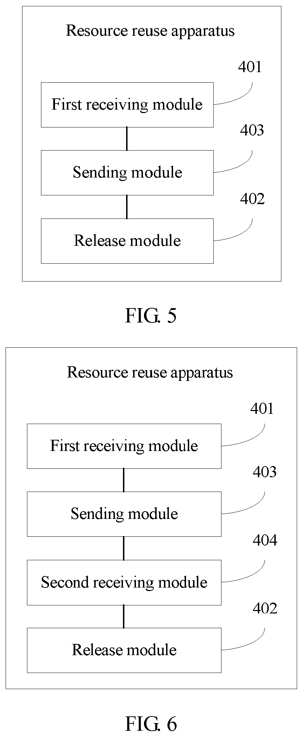

Referring to FIG. 5, the apparatus, not encompassed in the wording of the claims, further includes:
a sending module 403, configured to send a resource release response on a corresponding response subresource, where the resource release response carries a number of the second resource or a terminal identifier corresponding to the terminal of a low service priority that releases the second resource, where
the release module 402 is configured to release the occupied second resource after the resource release response is sent.

Referring to FIG. 6, the apparatus, not encompassed in the wording of the claims, further includes:
a second receiving module 404, configured to receive a resource release instruction on the corresponding response subresource, where the resource release instruction carries a number of the second resource or a terminal identifier corresponding to the terminal of a low service priority that releases the second resource, where
the release module 402 is configured to release the occupied second resource according to the received resource release instruction.

In an optional embodiment, the first resource is a resource used by any terminal of a high service priority to send a declaration message, and the second resource is a resource obtained by contention by each terminal of a low service priority.

In an optional embodiment, the response subresource is a resource used by any terminal of a low service priority to send a resource release response, and each response subresource corresponds to one second resource.

According to the apparatus provided in this embodiment, a declaration message sent on a first resource by a terminal of a high service priority in a same group is received, and an occupied second resource is released according to the received declaration message, so as to enable the terminal of a high service priority to obtain the released second resource. Because a terminal of a high service priority may obtain a resource without waiting, a delay of resource contention is shortened, and resource utilization efficiency is improved.

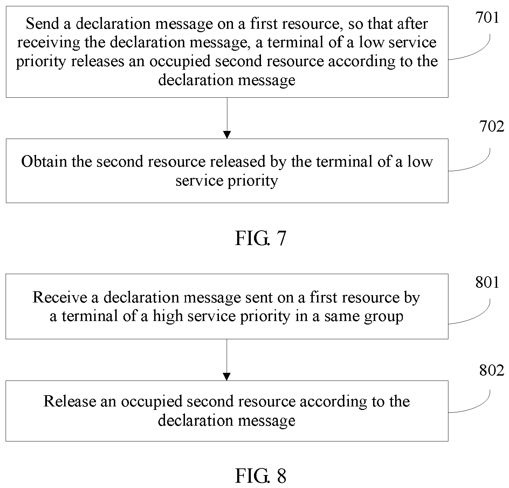

FIG. 7 is a flowchart of a resource contention method shown according to an exemplary embodiment, not encompassed in the wording of the claims, where the method shown in the method flowchart includes:
701. Send a declaration message on a first resource, so that after receiving the declaration message, a terminal of a low service priority releases an occupied second resource according to the declaration message.
702. Obtain the second resource released by the terminal of a low service priority.

In an optional embodiment, the declaration message carries a number of the second resource specified to be released; or
the declaration message carries a terminal identifier corresponding to the terminal of a low service priority that is specified to release the second resource.

In an optional embodiment, the declaration message carries priority information; and
after the sending a declaration message on a first resource, the method further includes:
receiving a resource release response sent on a corresponding response subresource by at least one terminal of a low service priority that meets a resource release condition and is determined according to the priority information, where the resource release response carries a number of the second resource or a terminal identifier corresponding to the terminal of a low service priority that releases the second resource.

In an optional embodiment, after the receiving a resource release response sent on a corresponding response subresource by at least one terminal of a low service priority that meets a resource release condition and is determined according to the priority information, the method further includes:
selecting, from the terminal that sends the resource release response, a terminal to release a resource; and
sending a resource release instruction to the selected terminal, so that the selected terminal releases an occupied second resource after receiving the resource release instruction, where the resource release instruction carries a number of the second resource or a terminal identifier corresponding to the terminal of a low service priority that releases the second resource.

In an optional embodiment, the first resource is a resource used by any terminal of a high service priority to send a declaration message, and the second resource is a resource obtained by contention by each terminal of a low service priority.

In an optional embodiment, the response subresource is a resource used by any terminal of a low service priority to send a resource release response, and each response subresource corresponds to one second resource.

According to the method provided in this embodiment, a declaration message is sent on a first resource, so that after receiving the declaration message, a terminal of a low service priority releases an occupied second resource according to the declaration message, so as to obtain the second resource released by the terminal of a low service priority. Because a terminal of a high service priority may obtain a resource without waiting, a delay of resource contention is shortened, and resource utilization efficiency is improved.

FIG. 8 is a flowchart of a resource reuse method shown according to embodiment covered by the claimed invention, where the method shown in the method flowchart includes:
801. Receive a declaration message sent on a first resource by a terminal of a high service priority in a same group.
802. Release an occupied second resource according to the declaration message.

In an optional embodiment, not encompassed in the wording of the claims, the declaration message carries a number of the second resource specified to be released; and
the releasing an occupied second resource according to the declaration message includes:
releasing the occupied second resource after determining that a number of the occupied second resource matches the number of the second resource specified to be released that is carried in the declaration message; or
the declaration message carries a terminal identifier corresponding to a terminal of a low service priority that is specified to release the second resource; and
the releasing an occupied second resource according to the declaration message includes:
   releasing the occupied second resource after determining that a terminal identifier is the same as the terminal identifier corresponding to the terminal of a low service priority that is specified to release the second resource.

In the claimed invention, the declaration message carries priority information; and
the releasing an occupied second resource according to the declaration message includes:
releasing the occupied second resource after determining that a priority of a currently processed service is lower than the priority information carried in the declaration message.

In an optional embodiment, not encompassed in the wording of the claims, after the receiving a declaration message sent on a first resource by a terminal of a high service priority in a same group, the method further includes:
sending a resource release response on a corresponding response subresource, where the resource release response carries a number of the second resource or a terminal identifier corresponding to the terminal of a low service priority that releases the second resource; and
releasing the occupied second resource after the resource release response is sent.

In an optional embodiment, not encompassed in the wording of the claims, after the sending a resource release response on a corresponding response subresource, the method further includes:
receiving a resource release instruction on the corresponding response subresource, where the resource release instruction carries a number of the second resource or a terminal identifier corresponding to the terminal of a low service priority that releases the second resource, where
the releasing the occupied second resource includes:
   releasing the occupied second resource according to the received resource release instruction.

In an optional embodiment, the first resource is a resource used by any terminal of a high service priority to send a declaration message. In the embodiment of the claimed invention the second resource is a resource obtained by contention by each terminal of a low service priority.

In an optional embodiment, the response subresource is a resource used by any terminal of a low service priority to send a resource release response, and each response subresource corresponds to one second resource.

According to the method provided in this embodiment of the present invention, a declaration message sent on a first resource by a terminal of a high service priority in a same group is received, and an occupied second resource is released according to the received declaration message, so as to enable the terminal of a high service priority to obtain the released second resource. Because a terminal of a high service priority may obtain a resource without waiting, a delay of resource contention is shortened, and resource utilization efficiency is improved.

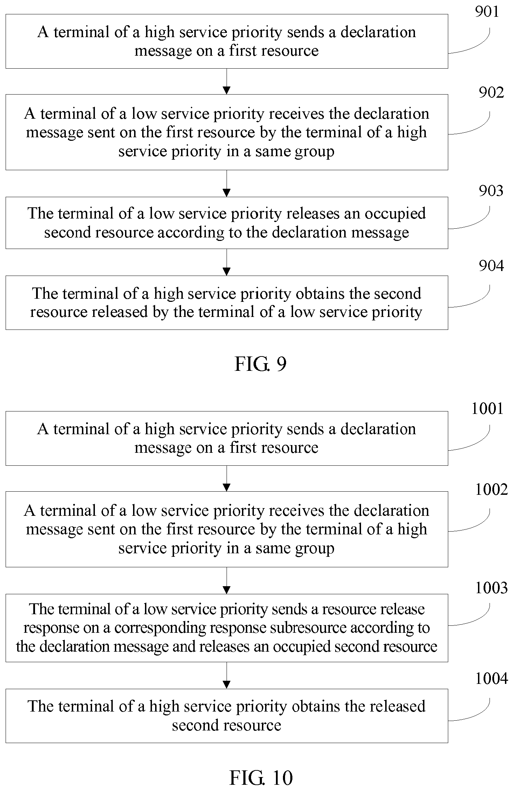

FIG. 9 is a flowchart of a resource contention method shown according to an embodiment covered by the claimed invention, where the method shown in the method flowchart includes:
901. A terminal of a high service priority sends a declaration message on a first resource.

At a moment, a service priority of a terminal in a group is high. To be able to obtain a resource in time and process a high priority service according to the obtained resource, the terminal of a high service priority sends a declaration message on a first resource, so that after receiving the declaration message, a terminal of a low service priority releases an occupied resource. A sending manner of the declaration message includes but is not limited to sending in a manner of a broadcast. The high priority service is a service of which a service level is greater than a threshold. For example, the threshold is set to 5, and when a level of a service is greater than 5, the service is a high priority service. The high priority service includes but is not limited to an emergency service, a specific service, and the like. This embodiment sets no specific limitation on the high priority service. The first resource is a resource used by any terminal of a high service priority to send a declaration message.

Because service types of terminals are different, resources that need to be used by the terminals to process services are also different. Therefore, to improve resource utilization efficiency and facilitate management of the resources used by the terminals, according to the method provided in this embodiment, terminals of a same service type need to be first grouped into a same group before a terminal of a low service priority and a terminal of a high service priority compete for a resource. For example, terminals of which a service type is A may be grouped into one group; terminals of which a service type is B may be grouped into one group, and so on. A quantity of terminals in a group may be two, five, eight, or the like. This embodiment sets no specific limitation on the quantity of terminals in a group.

Further, after terminals of a same service type are grouped into one group, to enable the terminals in the group to use a resource in the group to process services, according to the method provided in this embodiment, a resource pool further needs to be allocated to each group. The resource pool is a resource module. From a perspective of a frequency domain, the resource pool may be full bandwidth or may be any bandwidth. From a perspective of a time domain, the resource pool may be a slot slot, a subframe subframe, or a frame frame that is defined in LTE (Long Term Evolution), another time granularity, or the like. Certainly, the resource pool may also be multiple time-frequency resource blocks.

A manner of allocating a resource pool to each group includes but is not limited to the following two manners:
A first manner: being obtained in a predefined manner.

Specifically, because resources needed by different services are different, when terminals of a same service type are grouped into one group, each terminal may learn in advance a resource allocated to the group, where the resource is a predefined resource pool.

A second manner: being obtained in a semi-static notification manner.

Specifically, being obtained in a semi-static notification manner includes but is not limited to: in a scenario with network coverage, a resource is obtained from a base station, and the obtained resource is used as the resource pool allocated to each group; in a scenario with no network coverage, a resource is obtained from a synchronization header, and the obtained resource is used as the resource pool allocated to each group. The synchronization header is a terminal that has a resource in each group.

Further, after a resource pool is allocated to each group, to shorten a delay of resource contention and improve resource utilization efficiency, according to the method provided in this embodiment, a resource in each group may be divided before resource reuse. Specifically, a manner of dividing the resource in each group includes but is not limited to the following manner:

First, the resource in each group is divided into subresources of a first preset quantity.

Then, subresources of a second preset quantity are selected from the subresources of the first preset quantity as a first resource, and remaining subresources in the subresources of the first preset quantity are used as a second resource.

The first preset quantity may be 10, 15, 30, or the like. This embodiment sets no specific limitation on the first preset quantity. The second preset quantity may be one, two, three, or the like. This embodiment sets no specific limitation on the second preset quantity. However, because the subresources of the second preset quantity are a part of the subresources of the first preset quantity, a selected second preset quantity should be less than the first preset quantity during specific selection. The first resource is a resource used by any terminal of a high service priority to send a declaration message, and the second resource is a resource obtained by contention by each terminal of a low service priority, which is used by the terminal of a low service priority to process a low priority service. The first resource and the second resource are in different specific forms from different perspectives. From a perspective of a frequency domain, the first resource and the second resource may be full bandwidth or may be any bandwidth. From a perspective of a time domain, the first resource and the second resource may be a slot slot, a subframe subframe, or a frame frame that is defined in LTE, another time granularity, or the like. From another perspective, the first resource and the second resource may be one time-frequency resource block, or may be multiple time-frequency resource blocks.

Further, to enable a terminal of a low service priority to pertinently release an occupied second resource according to a received declaration message in a subsequent step, according to the method provided in this embodiment, each second resource needs to be numbered. Specifically, when each second resource is being numbered, each second resource may be numbered successively according to a sequence. For example, there are three second resources, and the second resources may be numbered successively as 1, 2, and 3, and so on. Certainly, each second resource may also be numbered randomly. For example, there are four second resources, and the second resources may be numbered successively as 3, 5, 7, and 8, and so on. When each second resource is being numbered, no matter which manner is used, a one-to-one correspondence between each second resource and a number needs to be ensured. The number of the second resource may be represented by numbers 1, 2, 3, and the like, or may be represented by A, B, C, and the like. This embodiment sets no specific limitation on a representation manner of the number of the second resource.

It should be noted that, because there are less terminals of a high service priority in a group compared with terminals of a low service priority, to improve resource utilization, after the resource in each group is divided, a relatively small quantity of subresources may be selected from the divided subresources as a first resource, so that the remaining subresources are used as a second resource. For example, when a resource in a group is being divided, if a quantity of divided subresources is 20, two subresources may be selected from the 20 subresources as a first resource, and the remaining 18 subresources are used as a second resource. Certainly, in a simple implementation manner, a part of resources may be reserved in the resource pool to be used as a first resource that is used to transmit a high priority service, and a terminal that needs to send a high priority service may directly send data on the first resource. Because there may be multiple terminals that need to send high priority services at the same time, the terminals that need to send the high priority services on the first resource may also obtain the first resource by means of contention. However, because a quantity of such terminals is relatively small, a probability of a conflict that occurs on the first resource is relatively low. A terminal of a low service priority can only compete for a resource in a resource except the first resource in the resource pool, or is allowed to compete for a resource in the first resource only when there is no available resource in a resource except the first resource in the resource pool.

Further, as can be learned from the foregoing content, the first resource is a part of the resource pool. In this case, obtaining the first resource includes but is not limited to obtaining the first resource from the resource pool. Certainly, in addition to the foregoing manner, a first resource may also be set for each group when terminals of a same service type are grouped into one group. For a manner of setting the first resource for each group, the first resource may be predefined for each group according to a predefined resource situation in each group, or the first resource may be set for each group in a semi-static notification manner, and so on. This embodiment sets no specific limitation on the manner of setting the first resource for each group. The manner of setting the first resource for each group in the semi-static notification manner includes but is not limited to: in a scenario with network coverage, a resource is obtained from a base station, and the obtained resource is used as the first resource set for each group; in a scenario with no network coverage, a resource is obtained from a synchronization header, and the obtained resource is used as the first resource set for each group.

902. A terminal of a low service priority receives the declaration message sent on the first resource by the terminal of a high service priority in a same group.

A resource in a group is limited, and the resource reuse method provided in this embodiment is mainly for a terminal of a low service priority and a terminal of a high service priority that are in the group. Therefore, to enable the terminal of a high service priority to promptly obtain a resource in time and process a high priority service according to the obtained resource, any terminal of a low service priority in the group may receive a declaration message sent on the first resource by the terminal of a high service priority in the same group, and further release an occupied second resource in a subsequent step, so that the terminal of a high service priority may process the high priority service according to the released second resource.

Further, in a D2D communication mode, communication may be performed between terminals, and before receiving the declaration message sent on the first resource by the terminal of a high service priority, the terminal of a low service priority in the group does not know which terminal in the group is the terminal of a high service priority. In addition, a resource used by each terminal of a low service priority to process a service is a resource occupied by the terminal of a low service priority, and at a same moment, a terminal cannot receive and send data at the same time on a resource occupied by the terminal. Therefore, to ensure that declaration messages sent by all terminals in the group are received, the terminal of a low service priority needs to receive the declaration message on another resource other than the occupied resource in the group.

903. The terminal of a low service priority releases an occupied second resource according to the declaration message.

To enable the terminal of a low service priority that receives the declaration message to pertinently release the occupied second resource, the declaration message sent by the terminal of a high service priority may carry related information about a second resource that is needed by the terminal of a high service priority. Therefore, to determine whether the occupied second resource needs to be released, after receiving the declaration message, the terminal of a low service priority may release the occupied second resource according to the received declaration message.

Because the information, carried in the declaration message, about the second resource that is needed by the terminal of a high service priority is different, the occupied second resource released according to the received declaration message is also different. Therefore, for the different information carried in the declaration message, the occupied second resource is released according to the received declaration message, which includes but is not limited to the following situations (not encompassed in the wording of the claims):

A first situation: the declaration message carries a number of the second resource that is specified to be released, and the occupied second resource is released according to the declaration message, which includes but is not limited to: releasing the occupied second resource after determining that a number of the occupied second resource matches the number of the second resource specified to be released that is carried in the declaration message. Specifically, if a number of the second resource that is occupied by the terminal of a low service priority is the same as the number of the second resource specified to be released that is carried in the declaration message, the terminal of a low service priority releases the occupied second resource; if the number of the second resource that is occupied by the terminal of a low service priority includes the number of the second resource specified to be released that is carried in the declaration message, the terminal of a low service priority releases the occupied second resource; and if the number of the second resource occupied by the terminal of a low service priority is included in the number of the second resource specified to be released that is carried in the declaration message, the terminal of a low service priority releases the occupied second resource.

For the foregoing process, to facilitate understanding, the following uses a specific example to provide detailed illustration.

For example, if a terminal in a group is a terminal of a high service priority at a moment, the terminal of a high service priority sends a declaration message on a first resource, where a number of a second resource specified to be released that is carried in the declaration message is 3. If a number of a second resource that is occupied by a terminal A of a low service priority is 3, because the number of the second resource that is occupied by the terminal A is the same as the number of the second resource specified to be released that is carried in the declaration message, the terminal A releases the occupied second resource; and if numbers of second resources that are occupied by a terminal B of a low service priority are 3 and 5, because the numbers of the second resources that are occupied by the terminal B include the number of the second resource specified to be released that is carried in the declaration message, the terminal B releases an occupied second resource.

It should be noted that in the foregoing process, that one number of a second resource specified to be released is carried in a declaration message sent by a terminal of a high service priority is used as an example. Certainly, according to a need of a high priority service, a terminal of a high service priority may also need to use two or three second resources. If two or more numbers of second resources specified to be released are carried in a declaration message, after a terminal of a low service priority receives the declaration message, a terminal of a low service priority that occupies a second resource of which a number matches a number of a second resource specified to be released that is carried in the declaration message releases the occupied second resource. For example, if numbers of second resources specified to be released that are carried in a declaration message are 3 and 4, after receiving the declaration message, terminals that occupy the second resource 3 and the second resource 4 release the occupied second resource 3 and second resource 4 according to the received declaration message.

A second situation: the declaration message carries a terminal identifier corresponding to the terminal of a low service priority that is specified to release the second resource, and the occupied second resource is released according to the declaration message, which includes but is not limited to: releasing the occupied second resource after determining that a terminal identifier is the same as the terminal identifier that is corresponding to the terminal of a low service priority specified to release the second resource and carried in the declaration message.

Specifically, because all terminals in a group experience a device identification phase, and after experiencing the device identification phase, each terminal in the group may learn existence of another terminal in the group and a terminal identifier of the another terminal. Therefore, when a service priority of a terminal in the group is high, the terminal of a high service priority may use a declaration message to carry a terminal identifier corresponding to a terminal that is specified to release a second resource.

For the foregoing process, to facilitate understanding, the following uses a specific example to provide detailed illustration.

For example, if a terminal in a group is a terminal of a high service priority at a moment, the terminal of a high service priority sends a declaration message on a first resource, where the declaration message carries a terminal identifier corresponding to a terminal of a low service priority that is specified to release a second resource. If the terminal identifier that is corresponding to the terminal of a low service priority specified to release the second resource and carried in the declaration message is A, a terminal of which a terminal identifier is A releases the occupied second resource after receiving the declaration message.

904. The terminal of a high service priority obtains the second resource released by the terminal of a low service priority.

After the terminal of a low service priority releases the occupied second resource according to the received declaration message, the terminal of a high service priority obtains the second resource released by the terminal of a low service priority, so as to process a high priority service according to the obtained second resource. Specifically, if the second resource released by the terminal of a low service priority is a second resource 3, the terminal of a high service priority obtains the second resource 3 released by the terminal of a low service priority, so as to process the high priority service on the second resource 3.

According to the method provided in this embodiment of the present invention, a declaration message sent on a first resource by a terminal of a high service priority in a same group is received, and an occupied second resource is released after a resource release condition is met, so that a terminal of a high service priority may obtain the released second resource. Because a terminal of a high service priority may obtain a resource without waiting, a delay of resource contention is shortened, and resource utilization efficiency is improved.

FIG. 10 is a flowchart of a resource contention method shown according to an embodiment covered by the claimed invention, where the method shown in the method flowchart includes:
1001. A terminal of a high service priority sends a declaration message on a first resource.

At a moment, a service priority of a terminal in a group is high. To be able to obtain a resource in time and process a high priority service according to the obtained resource, the terminal of a high service priority sends a declaration message on a first resource, so that after receiving the declaration message, a terminal of a low service priority releases an occupied resource. A sending manner of the declaration message includes but is not limited to sending in a manner of a broadcast. The high priority service is a service of which a service level is greater than a threshold. For example, the threshold is set to 5, and when a level of a service is greater than 5, the service is a high priority service. The high priority service includes but is not limited to an emergency service and a specific service. This embodiment sets no specific limitation on the high priority service. The first resource is a resource used by any terminal of a high service priority to send a declaration message.

Specifically, for a manner of grouping terminals of a same service type into one group and allocating a resource pool to each group, reference may be made to the foregoing step 901, and details are not described herein.

Further, after a resource is allocated to each group, to shorten a delay of resource contention and improve resource utilization efficiency, and to enable the terminal of a high service priority to select, from terminals that meet a resource release condition, a terminal to release a resource, when there are multiple terminals of a low service priority that meet the resource release condition, according to the method provided in this embodiment, a resource in the group needs to be divided before resource reuse. A specific dividing manner includes but is not limited to:

First, the resource in each group is divided into subresources of a second preset quantity.

Then, subresources of a third preset quantity are selected from the subresources of the second preset quantity as a first resource, subresources of a fourth preset quantity are selected as a response resource, and remaining subresources in the subresources of the second preset quantity are used as a second resource.

The second preset quantity may be 10, 15, 30, or the like. This embodiment sets no specific limitation on the second preset quantity. The third preset quantity may be three, four, five, or the like. This embodiment sets no specific limitation on the third preset quantity. The fourth preset quantity may be one, two, or the like. This embodiment sets no specific limitation on the fourth preset quantity. However, because the subresources of the third preset quantity and the subresources of the fourth preset quantity are a part of the subresources of the second preset quantity, a selected third preset quantity and fourth preset quantity should be less than the second preset quantity during specific selection. The first resource is a resource used by any terminal of a high service priority to send a declaration message, and the second resource is a resource obtained by contention by a terminal of a low service priority, which is used by the terminal of a low service priority to process a low priority service, and the response resource is used by a terminal that meets a resource release condition to send a resource release response. The first resource, the second resource, and the response resource are in different specific forms from different perspectives. From a perspective of a frequency domain, the first resource, the second resource, and the response resource may be full bandwidth or may be any bandwidth. From a perspective of a time domain, the first resource, the second resource, and the response resource may be a slot slot, a subframe subframe, or a frame frame that is defined in LTE, another time granularity, or the like. From another perspective, the first resource, the second resource, and the response resource may be one time-frequency resource block, or may be multiple time-frequency resource blocks.

Further, to enable the terminal of a high service priority to determine, in a subsequent step according to a received resource release response, a terminal that releases the resource release response, according to the method provided in this embodiment, after the response resource is obtained by dividing the resource in the group, the obtained response resource is further divided into response subresources of which a quantity is the same as that of second resources, and a correspondence between each response subresource and each second resource is determined.

Further, because the correspondence between each divided response subresource and each second resource is further used in a subsequent resource contention process, according to the method provided in this embodiment, after the correspondence between each response subresource and each second resource is determined, a step of storing the correspondence between each response subresource and each second resource is further executed. A method for storing the correspondence between each response subresource and each second resource includes but is not limited to storing the correspondence between each response subresource and each second resource in a server.

It should be noted that, because there are less terminals of a high service priority in a group compared with terminals of a low service priority, and a response resource cannot be used by the terminals of a low service priority and the terminals of a high service priority to process a service, but only used by a terminal that meets a resource release condition to send a response message, to improve resource utilization, after the resource in each group is divided, a relatively small quantity of subresources may be selected from the divided subresources as a first resource and a response resource. For example, when a resource in a group is being divided, if a quantity of divided subresources is 30, two subresources may be selected from the 30 subresources as a first resource, and one subresource may be selected as a response resource. Certainly, in a simple implementation manner, a part of resources may be reserved in the resource pool to be used as a first resource that is used to transmit a high priority service and as a response resource that is used to send a resource release response for a high service priority, and a terminal that needs to send a high priority service may directly send data on the first resource and send the resource release response on the response resource. Because there may be multiple terminals that need to send high priority services at the same time, the terminals that need to send the high priority services on the first resource may also obtain the first resource by means of contention. However, because a quantity of such terminals is relatively small, a probability of a conflict that occurs on the first resource is relatively low. In addition, because the response resource is divided into response subresources of which a quantity is the same as that of second resources, there is no possibility that a conflict occurs when the resource release response is sent. However, a terminal of a low service priority can only compete for a resource in a resource except the first resource in the resource pool, or is allowed to compete for a resource in the first resource only when there is no available resource in a resource except the first resource in the resource pool.

A manner of obtaining the first resource is the same as the foregoing step 901. For details, refer to the foregoing step 901, and the details are not described herein.

1002. A terminal of a low service priority receives the declaration message sent on the first resource by the terminal of a high service priority in a same group.

A specific implementation manner of this step is the same as the implementation manner of step 902 in the foregoing embodiment. For details, refer to the content of step 902 in the foregoing embodiment, and the details are not described herein.

1003. The terminal of a low service priority sends a resource release response on a corresponding response subresource according to the declaration message and releases an occupied second resource.

In the embodiment of claimed invention, the declaration message sent by the terminal of a high service priority carries priority information. Therefore, after receiving the declaration message, the terminal of a low service priority releases the occupied second resource according to the priority information carried in the declaration message. The releasing the occupied second resource according to the priority information carried in the declaration message includes : releasing the occupied second resource after determining that a priority of a currently processed service is lower than the priority information carried in the declaration message.

For the foregoing process, to facilitate understanding, the following uses a specific example to provide detailed illustration.

If a terminal in a group is a terminal of a high service priority at a moment, the terminal of a high service priority sends a declaration message on a first resource, where the declaration message carries priority information. If it is determined, according to the received declaration message, that a priority of a service currently processed by a terminal A is lower than the priority information carried in the declaration message, A releases an occupied second resource.

It should be noted that, because a terminal that needs to release an occupied second resource is not clearly specified in this embodiment, and because each terminal of a low service priority also needs to process a service, though a terminal that meets a condition that a priority of a currently processed service is lower than the priority information carried in the declaration message exists in this case, a situation may exist that none of terminals of which a priority of a current service is lower than the priority information carried in the declaration message releases an occupied second resource. To enable the terminal of a high service priority to obtain the second resource and process a high priority service in time according to the second resource, a resource release rule further needs to be set according to the method provided in this embodiment. Specifically, setting the resource release rule includes but is not limited to: setting a terminal of a lowest service priority as a terminal to release an occupied second resource, and so on. Certainly, in addition to the foregoing manner, if a service processed by a terminal of a low service priority in a group is coming to an end, the terminal of a low service priority of which the service is coming to an end may be used as a terminal to release an occupied second resource.

Further, to make the terminal of a high service priority learn the released second resource, before releasing the occupied second resource, the terminal of a low service priority further sends a resource release response on a corresponding response subresource, so that after receiving the resource release response, the terminal of a high service priority may determine an available second resource according to the received resource release response. Content carried in the resource release response includes but is not limited to a number of the second resource or a terminal identifier corresponding to a terminal of a low service priority that releases the second resource. This embodiment sets no specific limitation on the content carried in the resource release response.

For the foregoing process, to facilitate understanding, the following uses a specific example to provide detailed illustration.

For example, terminals of a low service priority include a terminal A, a terminal B, and a terminal C. A response subresource corresponding to a second resource occupied by the terminal A is numbered 1, a response subresource corresponding to a second resource occupied by the terminal B is numbered 2, and a response subresource corresponding to a second resource occupied by the terminal C is numbered 3. If a priority of a service currently processed by the terminal A is lower than the priority information carried in the declaration message, the terminal A may release the occupied second resource. To make the terminal of a high service priority learn the released second resource, before releasing the occupied second resource, the terminal A sends a resource release response on the response subresource 1, so that after receiving the resource release response, the terminal of a high service priority determines an available second resource according to the received resource release response.

Preferably, to improve resource utilization, and to prevent some second resources released by terminals of a low service priority from being unable to be used because a quantity of second resources released by terminals of a low service priority is greater than a quantity of resources that need to be used by terminals of a high service priority, after sending the resource release response, the terminal of a low service priority further receives a resource release instruction sent by the terminal of a high service priority, and releases the occupied second resource according to the received resource release instruction after receiving the resource release instruction.

Specifically, a manner of receiving the resource release instruction sent by the terminal of a high service priority includes but is not limited to the following manner: at least one terminal of a low service priority that may release an occupied second resource and is determined according to the priority information sends a resource release response on a corresponding response subresource to the terminal of a high service priority; after receiving the resource release response sent on the corresponding response subresource by the at least one terminal of a low service priority that meets a resource release condition and is determined according to the priority information, the terminal of a high service priority selects, from the terminal that sends the resource release response, a terminal to release a resource, and further sends a resource release instruction to the selected terminal, so that the selected terminal releases an occupied second resource after receiving the resource release instruction. Content carried in the resource release instruction includes but is not limited to a number of the second resource or a terminal identifier corresponding to a terminal of a low service priority that releases the second resource. This embodiment sets no specific limitation on the content carried in the resource release instruction. Specifically, when selecting a resource release response from the received resource release response, the terminal of a high service priority may perform selection according to a terminal situation corresponding to the resource release response, or may perform selection randomly. This embodiment sets no specific limitation on a selection manner of selecting a resource release response from the received resource release response by the terminal of a high service priority, that is, a manner of selecting a terminal to release a resource is not limited.

For the foregoing process, to facilitate understanding, the following uses a specific example to provide detailed illustration.

For example, terminals of a low service priority include a terminal A, a terminal B, and a terminal C. A response subresource corresponding to a second resource occupied by the terminal A is numbered 1, a response subresource corresponding to a second resource occupied by the terminal B is numbered 2, and a response subresource corresponding to a second resource occupied by the terminal C is numbered 3. If terminals that meet a resource release condition and that are determined according to the priority information are the terminal A and the terminal B, the terminal A sends a resource release response on the corresponding response subresource 1 to the terminal of a high service priority, and the terminal B sends a resource release response on the corresponding subresource 2 to the terminal of a high service priority. After receiving the resource release responses sent on the corresponding response subresources by the terminal A and the terminal B, the terminal of a high service priority selects the terminal A as a terminal to release a resource, and sends a resource release instruction to the terminal A. The terminal A releases the occupied second resource after receiving the resource release instruction.

1004. The terminal of a high service priority obtains the released second resource.

A specific implementation manner of this step is the same as the implementation manner of step 904 in the foregoing embodiment. For details, refer to the content of step 904 in the foregoing embodiment, and the details are not described herein.

According to the method provided in this embodiment of the present invention, a declaration message is sent on a first resource, so that after receiving the declaration message, a terminal of a low service priority releases an occupied second resource according to the declaration message, so as to obtain the second resource released by the terminal of a low service priority. Because a terminal of a high service priority may obtain a resource without waiting, a delay of resource contention is shortened, and resource utilization efficiency is improved.

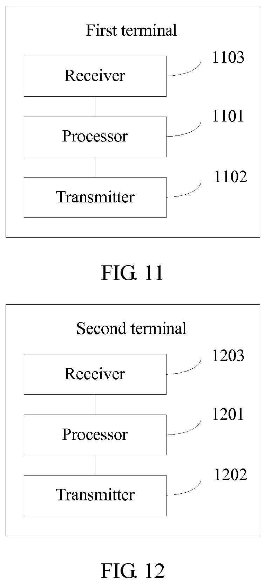

FIG. 11 is a schematic structural diagram of a first terminal in an implementation manner, where the first terminal includes a processor 1101, a transmitter 1102, and a receiver 1103.

The transmitter 1102 is configured to send a declaration message on a first resource, so that after receiving the declaration message, a terminal of a low service priority releases an occupied second resource according to the declaration message.

The processor 1101 is configured to obtain the second resource released by the terminal of a low service priority.

In an optional embodiment, not encompassed in the wording of the claims, the declaration message carries a number of the second resource specified to be released; or
the declaration message carries a terminal identifier corresponding to the terminal of a low service priority that is specified to release the second resource.

In an optional embodiment, the receiver 1103 is configured to receive a resource release response sent on a corresponding response subresource by at least one terminal of a low service priority that meets a resource release condition and is determined according to the priority information, where the resource release response carries a number of the second resource or a terminal identifier corresponding to the terminal of a low service priority that releases the second resource.

In an optional embodiment, the processor 1101 is configured to select, from the terminal that sends the resource release response, a terminal to release a resource; and
the transmitter 1103 is configured to send a resource release instruction to the selected terminal, so that the selected terminal releases an occupied second resource after receiving the resource release instruction, where the resource release instruction carries a number of the second resource or a terminal identifier corresponding to the terminal of a low service priority that releases the second resource.

In an optional embodiment, the first resource is a resource used by any terminal of a high service priority to send a declaration message. In the claimed invention the second resource is a resource obtained by contention by each terminal of a low service priority.

In an optional embodiment, the response subresource is a resource used by any terminal of a low service priority to send a resource release response, and each response subresource corresponds to one second resource.

According to the first terminal provided in this embodiment of the present invention, a declaration message is sent on a first resource, so that after receiving the declaration message, a terminal of a low service priority releases an occupied second resource according to the declaration message, so as to obtain the second resource released by the terminal of a low service priority. Because a terminal of a high service priority may obtain a resource without waiting, a delay of resource contention is shortened, and resource utilization efficiency is improved.

FIG. 12 is a schematic structural diagram of a second terminal in an implementation manner, where the second terminal includes a processor 1201, a transmitter 1202, and a receiver 1203.

The receiver 1203 is configured to receive a declaration message sent on a first resource by a terminal of a high service priority in a same group.

The processor 1201 is configured to release an occupied second resource according to the declaration message.

In an optional embodiment, not encompassed in the wording of the claims, the processor 1201 is configured to release the occupied second resource after determining that a number of the occupied second resource matches the number of the second resource specified to be released that is carried in the declaration message; or release the occupied second resource after determining that a terminal identifier is the same as the terminal identifier corresponding to the terminal of a low service priority that is specified to release the second resource.

The processor 1201 is configured to release the occupied second resource after determining that a priority of a currently processed service is lower than the priority information carried in the declaration message.

In an optional embodiment, the transmitter 1202 is configured to send a resource release response on a corresponding response subresource, where the resource release response carries a number of the second resource or a terminal identifier corresponding to the terminal of a low service priority that releases the second resource; and
the processor 1201 is configured to release the occupied second resource after the resource release response is sent.

In an optional embodiment, the receiver 1203 is configured to receive a resource release instruction on a corresponding response subresource, where the resource release instruction carries a number of the second resource or a terminal identifier corresponding to the terminal of a low service priority that releases the second resource; and
the processor 1201 is configured to release the occupied second resource according to the received resource release instruction.

In an optional embodiment, the first resource is a resource used by any terminal of a high service priority to send a declaration message. In the embodiment of the claimed invention, the second resource is a resource obtained by contention by each terminal of a low service priority.

In an optional embodiment, the response subresource is a resource used by any terminal of a low service priority to send a resource release response, and each response subresource corresponds to one second resource.

According to the second terminal provided in this embodiment of the present invention, a declaration message sent on a first resource by a terminal of a high service priority in a same group is received, and an occupied second resource is released according to the received declaration message, so as to enable the terminal of a high service priority to obtain the released second resource. Because a terminal of a high service priority may obtain a resource without waiting, a delay of resource contention is shortened, and resource utilization efficiency is improved.

It should be noted that the division of the foregoing functional modules is merely used as an example for description when the resource reuse apparatus provided in the foregoing embodiments reuses a resource. In a practical application, the foregoing functions may be allocated to different functional modules for completion according to a requirement. That is, an internal structure of resource contention reuse is divided into different functional modules so as to complete all or part of the functions described above. In addition, the resource contention apparatus provided in the foregoing embodiments pertains to a same concept as the resource contention method embodiments. For a specific implementation process, refer to the method embodiments, and details are not described herein.

The sequence numbers of the foregoing embodiments of the present invention are merely for illustrative purposes, and are not intended to indicate priorities of the embodiments.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

## Claims

1. A first terminal of a service type, wherein the first terminal is a terminal with a high priority of service that is in a group of terminals of the same service type and wherein the high priority of service is a service of which a service level is greater than a threshold, and the first terminal comprises:
a first sending module (101), configured to send a declaration message on a first resource to a second terminal with a low priority of service that is in the group of terminals of the same service type as the first terminal, wherein the declaration message carries priority information of the first terminal and the declaration message indicates the second terminal with a low priority of service to release an occupied second resource on a condition that the priority of the low priority of service is lower than the priority information, and wherein the second resource is a resource obtained by contention by the second terminal; and
an obtaining module (102), configured to obtain the second resource released by the second terminal.

2. The first terminal according to claim 1, wherein a resource pool is allocated to the group of terminals of the same service type.

3. A second terminal of a service type, wherein the second terminal is a terminal with a low priority of service that is in a group of terminals of the same service type, and the second terminal comprises:
a first receiving module (401), configured to receive a declaration message sent on a first resource by a first terminal with a high priority of service that is in the group of terminals of the same service type as the second terminal, wherein the declaration message carries priority information of the first terminal, wherein the high priority service is a service of which a service level is greater than a threshold; and
a release module (402), configured to release an occupied second resource according to the declaration message on a condition that the priority of the low priority of service is lower than the priority information, and wherein the second resource is a resource obtained by contention by the second terminal.

4. The second terminal according to claim 3, wherein a resource pool is allocated to the group of terminals of the same service type.

5. A resource reuse method, wherein the method comprises:
sending (901, 1001), by a first terminal of a service type, wherein the first terminal is a terminal with a high priority of service that is in a group of terminals of the same service type and wherein the high priority service is a service of which a service level is greater than a threshold, a declaration message on a first resource to a second terminal with a low priority of service that is in the group of terminals of the same service type as the first terminal, wherein the declaration message carries priority information of the first terminal and the declaration message indicates the terminal to release an occupied second resource on a condition that the low priority of service is lower than the priority information, and the second resource is a resource obtained by contention by the second terminal; and
obtaining (904, 1004), by the first terminal, the second resource released by the second terminal.

6. The method according to claim 5, wherein a resource pool is allocated to the group of terminals of the same service type.

7. A resource reuse method, wherein the method comprises:
receiving (902, 1002), by a second terminal of a service type, wherein the second terminal is a terminal with a low priority of service that is in a group of terminals of the same service type, a declaration message sent on a first resource by a first terminal with a high priority of service that is in the group of terminals of the same service type as the second terminal, wherein the declaration message carries priority information of the first terminal, wherein the high priority service is a service of which a service level is greater than a threshold; and
releasing (903, 1003), by the second terminal, an occupied second resource according to the declaration message on a condition that the priority of the low priority of service is lower than the priority information, and wherein the second resource is a resource obtained by contention by the second terminal.

8. The method according to claim 7, wherein a resource pool is allocated to the group of terminals of the same service type.

## Patentansprüche

1. Erstes Endgerät eines Diensttyps, wobei das erste Endgerät ein Endgerät mit einer hohen Dienstpriorität ist, das in einer Gruppe von Endgeräten des gleichen Diensttyps ist, wobei die hohe Dienstpriorität ein Dienst ist, dessen Dienstebene höher ist als ein Schwellenwert und wobei das erste Endgerät Folgendes umfasst:
ein erstes Sendemodul (101), das konfiguriert ist, eine Deklarationsnachricht auf einem ersten Betriebsmittel an ein zweites Endgerät mit einer niedrigen Dienstpriorität, das in der Gruppe von Endgeräten des gleichen Diensttyps wie das erste Endgerät ist, zu senden, wobei die Deklarationsnachricht Prioritätsinformationen des ersten Endgeräts führt und die Deklarationsnachricht für das zweite Endgerät mit einer niedrigen Dienstpriorität angibt, ein besetztes zweites Betriebsmittel unter einer Bedingung, dass die Priorität der niedrigen Dienstpriorität niedriger als die Prioritätsinformation ist, freizugeben, und wobei das zweite Betriebsmittel ein Betriebsmittel ist, das durch Konkurrenz durch das zweite Endgerät erhalten wird; und
ein Erhaltemodul (102), das konfiguriert ist, das durch das zweite Endgerät freigegebene zweite Betriebsmittel zu erhalten.

2. Erstes Endgerät nach Anspruch 1, wobei der Gruppe von Endgeräten des gleichen Diensttyps ein Betriebsmittel-Pool zugewiesen ist.

3. Zweites Endgerät eines Diensttyps, wobei das zweite Endgerät ein Endgerät mit einer niedrigen Dienstpriorität ist, das in einer Gruppe von Endgeräten des gleichen Diensttyps ist, und wobei das zweite Endgerät Folgendes umfasst:
ein erstes Empfangsmodul (401), das konfiguriert ist, eine Deklarationsnachricht, die auf einem ersten Betriebsmittel durch ein erstes Endgerät mit einer hohen Dienstpriorität, das in der Gruppe von Endgeräten des gleichen Diensttyps wie das zweite Endgerät ist, gesendet wird, zu empfangen, wobei die Deklarationsnachricht Prioritätsinformationen des ersten Endgeräts führt, wobei der Dienst hoher Priorität ein Dienst ist, dessen Dienstebene höher ist als ein Schwellenwert; und
ein Freigabemodul (402), das konfiguriert ist, ein besetztes zweites Betriebsmittel gemäß der Deklarationsnachricht unter einer Bedingung, dass die Priorität der niedrigen Dienstpriorität niedriger ist als die Prioritätsinformationen, freizugeben, und wobei das zweite Betriebsmittel ein Betriebsmittel ist, das durch Konkurrenz durch das zweite Endgerät erhalten wird.

4. Zweites Endgerät nach Anspruch 3, wobei der Gruppe von Endgeräten des gleichen Diensttyps ein Betriebsmittel-Pool zugewiesen ist.

5. Betriebsmittelwiederverwendungsverfahren, wobei das Verfahren Folgendes umfasst:
Senden (901, 1001), durch ein erstes Endgerät eines Diensttyps, wobei das erste Endgerät ein Endgerät mit einer hohen Dienstpriorität ist, das in einer Gruppe von Endgeräten des gleichen Diensttyps ist, und wobei der Dienst hoher Priorität ein Dienst ist, dessen Dienstebene höher ist als ein Schwellenwert, einer Deklarationsnachricht auf einem ersten Betriebsmittel an ein zweites Endgerät mit einer niedrigen Dienstpriorität, das in der Gruppe von Endgeräten des gleichen Diensttyps wie das erste Endgerät ist, wobei die Deklarationsnachricht Prioritätsinformationen des ersten Endgeräts führt und die Deklarationsnachricht für das Endgerät angibt, ein besetztes zweites Betriebsmittel unter einer Bedingung, dass die niedrige Dienstpriorität niedriger als die Prioritätsinformationen ist, freizugeben, und das zweite Betriebsmittel ein Betriebsmittel ist, das durch Konkurrenz durch das zweite Endgerät erhalten wird; und
Erhalten (904, 1004) durch das erste Endgerät des zweiten Betriebsmittels, das von dem zweiten Terminal freigegeben worden ist.

6. Verfahren nach Anspruch 5, wobei der Gruppe von Endgeräten des gleichen Diensttyps ein Betriebsmittel-Pool zugewiesen ist.

7. Betriebsmittelwiederverwendungsverfahren, wobei das Verfahren Folgendes umfasst:
Empfangen (902, 1002) durch ein zweites Endgerät eines Diensttyps, wobei das zweite Endgerät ein Endgerät mit einer niedrigen Dienstpriorität ist, das in einer Gruppe von Endgeräten des gleichen Diensttyps ist, einer Deklarationsnachricht, die auf einem ersten Betriebsmittel durch ein erstes Endgerät mit einer hohen Dienstpriorität, das in der Gruppe von Endgeräten des gleichen Diensttyps wie das zweite Endgerät ist, gesendet wird, wobei die Deklarationsnachricht Prioritätsinformationen des ersten Endgeräts führt, wobei der Dienst hoher Priorität ein Dienst ist, dessen Dienstebene höher ist als ein Schwellenwert; und
Freigeben (903, 1003) durch das zweite Endgerät eines besetzten zweiten Betriebsmittels gemäß der Deklarationsnachricht unter einer Bedingung, dass die Priorität der niedrigen Dienstpriorität niedriger ist als die Prioritätsinformationen, und wobei das zweite Betriebsmittel ein Betriebsmittel ist, das durch Konkurrenz durch das zweite Endgerät erhalten wird.

8. Verfahren nach Anspruch 7, wobei der Gruppe von Endgeräten des gleichen Diensttyps ein Betriebsmittel-Pool zugewiesen ist.

## Revendications

1. Premier terminal d'un type de service, dans lequel le premier terminal est un terminal avec une haute priorité de service qui est dans un groupe de terminaux du même type de service et dans lequel la haute priorité de service est un service dont un niveau de service est supérieur à un seuil, et le premier terminal comprend :
un premier module d'envoi (101), configuré pour envoyer un message de déclaration sur une première ressource à un second terminal avec une basse priorité de service qui est dans le groupe de terminaux du même type de service que le premier terminal, dans lequel le message de déclaration porte des informations de priorité du premier terminal et le message de déclaration indique au second terminal avec une basse priorité de service de libérer une seconde ressource occupée à condition que la priorité de la basse priorité de service soit inférieure aux informations de priorité, et dans lequel la seconde ressource est une ressource obtenue par contention par le second terminal ; et
un module d'obtention (102), configuré pour obtenir la seconde ressource libérée par le second terminal.

2. Premier terminal selon la revendication 1, dans lequel une réserve de ressources est attribuée au groupe de terminaux du même type de service.

3. Second terminal d'un type de service, dans lequel le second terminal est un terminal avec une basse priorité de service qui est dans un groupe de terminaux du même type de service, et le second terminal comprend :
un premier module de réception (401), configuré pour recevoir un message de déclaration envoyé sur une première ressource par un premier terminal avec une haute priorité de service qui est dans le groupe de terminaux du même type de service que le second terminal, dans lequel le message de déclaration porte des informations de priorité du premier terminal, dans lequel le service de haute priorité est un service dont un niveau de service est supérieur à un seuil ; et
un module de libération (402), configuré pour libérer une seconde ressource occupée selon le message de déclaration à condition que la priorité de la basse priorité de service soit inférieure aux informations de priorité, et dans lequel la seconde ressource est une ressource obtenue par contention par le second terminal.

4. Second terminal selon la revendication 3, dans lequel une réserve de ressources est attribuée au groupe de terminaux du même type de service.

5. Procédé de réutilisation de ressource, dans lequel le procédé comprend :
l'envoi (901, 1001), par un premier terminal d'un type de service, dans lequel le premier terminal est un terminal avec une haute priorité de service qui est dans un groupe de terminaux du même type de service et dans lequel le service de haute priorité est un service dont un niveau de service est supérieur à un seuil, d'un message de déclaration sur une première ressource à un second terminal avec une basse priorité de service qui est dans le groupe de terminaux du même type de service que le premier terminal, dans lequel le message de déclaration porte des informations de priorité du premier terminal et le message de déclaration indique au terminal de libérer une seconde ressource occupée à condition que la basse priorité de service soit inférieure aux informations de priorité, et la seconde ressource est une ressource obtenue par contention par le second terminal ; et
l'obtention (904, 1004), par le premier terminal, de la seconde ressource libérée par le second terminal.

6. Procédé selon la revendication 5, dans lequel une réserve de ressources est attribuée au groupe de terminaux du même type de service.

7. Procédé de réutilisation de ressource, dans lequel le procédé comprend :
la réception (902, 1002), par un second terminal d'un type de service, dans lequel le second terminal est un terminal avec une basse priorité de service qui est dans un groupe de terminaux du même type de service, d'un message de déclaration envoyé sur une première ressource par un premier terminal avec une haute priorité de service qui est dans le groupe de terminaux du même type de service que le second terminal, dans lequel le message de déclaration porte des informations de priorité du premier terminal, dans lequel le service de haute priorité est un service dont un niveau de service est supérieur à un seuil ; et
la libération (903, 1003), par le second terminal, d'une seconde ressource occupée selon le message de déclaration à condition que la priorité de la basse priorité de service soit inférieure aux informations de priorité, et dans lequel la seconde ressource est une ressource obtenue par contention par le second terminal.

8. Procédé selon la revendication 7, dans lequel une réserve de ressources est attribuée au groupe de terminaux du même type de service.
